# EUROPEAN PATENT APPLICATION

(11) **EP 4 364 591 A1**
(43) Date of publication of application: **08.05.2024**
(21) Application number: 22831469.6
(22) Date of filing: 13.05.2022
(51) Int. Cl.: A24F 40/40, A24F 40/46, A24F 40/20, A24F 40/85, B01J 13/00, B01J 13/02

(54) **AEROSOL FORMING DEVICE**

(30) Priority: 30.06.2021 CN 202121482233 U
(71) Applicant: Shenzhen Merit Technology Co., Ltd., Shenzhen, Guangdong 518105 (CN)
(72) Inventor: YUAN, Yongbao, Shenzhen, Guangdong 518105 (CN); LIAO, Yancheng, Shenzhen, Guangdong 518105 (CN)
(74) Representative: Herrero & Asociados, S.L.
(86) International application number: PCT/CN2022/092853
(87) International publication number: WO 2023/273642

(57) **Abstract**

An aerosol forming device (10), comprising a main unit (11), a heating assembly (12) and a fixing assembly (13), wherein the main unit (11) is provided with an accommodation slot (1120); the heating assembly (12) is at least partially accommodated in the accommodation slot (1120), and is electrically connected to the main unit (11); and the fixing assembly (13) is detachably connected to the main unit (11), and when the fixing assembly (13) is connected to the main unit (11), the fixing assembly (13) comes into contact with part of the heating assembly (12) to fix the heating assembly (12) to the main unit (11). By means of the aerosol forming device (10), the heating assembly (12) can be replaced and cleaned more conveniently.

## Description

### CROSS REFERENCE TO RELATED APPLICATIONS

The present disclosure claims priority of Chinese patent Application No. 202121482233.1, filed on June 30, 2021, the entire contents of which are hereby incorporated by reference in their entirety.

### TECHNICAL FIELD

The present disclosure relates to the field of atomization devices, and in particular to an aerosol-forming device.

### BACKGROUND

A heat not burning (HNB) device is a combination device of a heating device and an aerosol-generating substance (such as processed tobacco products). An external heating device heats the aerosol-generating substance to a high temperature at which an aerosol is formed but which is not sufficient for combustion (i.e., the temperature may be in the range from 200°C to 350°C). Based on a case that the aerosol-generating substance is not burned, it may make the aerosol-generating substance emit aerosol fragrance. Due to ignition of smoking, the temperature may reach the range from 350°C to 600°C. As long as the temperature reaches the temperature range, a lot of harmful substances may be generated due to combustion, such as carbon monoxide, nicotine and other alkaloids, amines, nitriles, alcohols, phenols, alkanes, aldehydes, nitrogen oxides, etc. In a HNB method, the temperature is about 300°C without generating an open flame, and thus the harmful substances may be greatly reduced. For example, in the HNB method, low-temperature baking, rather than directly burning traditional cigarettes, is used to heat, and it may gradually gain popularity among more and more smokers worldwide, which represents a new direction for upgrading a global tobacco industry.

Currently, an aerosol-forming device generally includes a heating assembly and a body. The heating assembly is configured to heat and atomize an aerosol-forming substance when energized. The body is connected to the heating assembly to supply power to the heating assembly. However, in the aerosol-forming device in the related art, the heating assembly is generally fixedly connected to the body or integrally formed with the body, which is inconvenient to replace and clean the heating assembly.

### SUMMARY OF THE DISCLOSURE

The present disclosure provides an aerosol-forming substance, so as to solve a problem that it is inconvenient to replace and clean the heating assembly of the aerosol-forming device in the related art.

In order to solve the above technical problems, a technical solution adopted by the present disclosure is to provide an aerosol-forming device. The aerosol-forming device includes: a host, having a receiving groove; a heating assembly, at least partially received in the receiving groove and electrically connected to the host; a fixing assembly, detachably connected to the host, where in response to the fixing assembly being connected to the host, the heating assembly is partially in contact with the fixing assembly, so as to fix the heating assembly to the host.

In some embodiments, the heating assembly includes a fixing mount and a heating body arranged on the fixing mount; the fixing assembly includes a fixing body and a first pressing portion, and a receiving cavity is defined by the fixing body; and the first pressing portion is in contact with the fixing mount, and the heating body penetrates the first pressing portion and extends into the receiving cavity.

In some embodiments, the fixing body is a tubular body, and the first pressing portion is arranged on the inner wall surface of the tubular body and is located on the end of the tubular body connected to the end of the host.

In some embodiments, the first pressing portion is a ringed-shape flange, and the ringed-shape flange is arranged in a circle along the peripheral direction of the tubular body; or the first pressing portion includes a plurality of protruding blocks, and the plurality of protruding blocks are arranged at intervals along the peripheral direction of the tubular body.

In some embodiments, a through hole is defined on the first pressing portion, and the heating body penetrates the through hole and extends into the receiving cavity; and the shape and size of the through hole match the shape and size of the heating body.

In some embodiments, the fixing mount includes a fixing base and a limiting portion arranged on the outer sidewall of the fixing base, the fixing base is received in the receiving groove, the outer diameter of the limiting portion is greater than the diameter of the receiving groove, and the first pressing portion is in contact with the limiting portion.

In some embodiments, the outer diameter of the fixing base is consistent with the inner diameter of the first pressing portion; and/or the outer diameter of the fixing base is consistent with the diameter of the receiving groove, the limiting portion is located on the end of the fixing base close to the first pressing portion, and the linear distance between the limiting portion and the end surface of the end of the fixing base close to the first pressing portion is consistent with the thickness of the first pressing portion.

In some embodiments, the host includes a housing and an inner base arranged in the housing, the receiving groove is defined on the inner base, and the outer diameter of the limiting portion is consistent with the inner diameter of the housing.

In some embodiments, the fixing assembly further includes a second pressing portion; and the second pressing portion is connected to the fixing body, extends along the length direction of the fixing body towards the direction away from the fixing body, and is configured to limit the heating assembly in the radial direction of the fixing mount.

In some embodiments, the second pressing portion is a tubular body, and the tube diameter of the tubular body is consistent with the outer diameter of the limiting portion.

In some embodiments, a first tubular connection portion is arranged on the end of the fixing assembly facing the host, and a second tubular connection portion is arranged on the end of the host facing the fixing assembly; and one of the first tubular connection portion and the second tubular connection portion is arranged with an external thread, and the other of the first tubular connection portion and the second tubular connection portion is arranged with an internal thread, such that the first tubular connection portion is threadedly connected to the second tubular connection portion.

In some embodiments, a first tubular connection portion is arranged on the end of the fixing assembly facing the host, the second tubular connection portion is arranged on the end of the host facing the fixing assembly; and one of the first tubular connection portion and the second tubular connection portion is arranged with an engaging portion, and the other of the first tubular connection portion and the second tubular connection portion is arranged with an engaging groove, and the first tubular connection portion is engaged with the second tubular connection portion.

In some embodiments, the engaging portion is formed on the outer wall surface of the fixing assembly; the engaging groove includes a guiding groove and a clamping groove which communicate with each other; and the guiding groove extends from the end surface of the host facing the end of the fixing assembly toward the end of the host away from the fixing assembly, the clamping groove extends along the peripheral direction of the host, and the engaging portion slides into the clamping groove along the guiding groove for clamping.

In the aerosol-forming device provided by some embodiments of the present disclosure, by arranging the host and the heating assembly, a receiving groove is defined on the host, such that the heating assembly is at least partially received in the receiving groove, and thus the heating assembly may be electrically connected to the host. At the same time, by arranging the fixing assembly, the fixing assembly is detachably connected to the host, and after the fixing assembly is connected to the host, the heating assembly is at least partially in contact with the fixing assembly, so as to fix the heating assembly to the host. Since the heating assembly is fixedly in contact with the receiving groove of the host via the fixing assembly, and the fixing assembly is detachably connected to the host, such that when it is necessary to replace or clean the heating assembly, it is only necessary to disassemble the fixing assembly, and thus the heating assembly may be separated from the host . In this way, it may be possible to allow users to replace the heating assembly by themselves, and thus it may be more convenient to replace and clean the heating assembly.

### BRIEF DESCRIPTION OF THE DRAWINGS

FIG. 1 is an overall structural schematic view of an aerosol-forming device according to an embodiment of the present disclosure.
FIG. 2 is an exploded schematic view of the aerosol-forming device in FIG. 1.
FIG. 3a is a schematic cross-sectional view of the aerosol-forming device in FIG. 1 along an A-A direction.
FIG. 3b is a partial enlarged view of an area B in FIG. 3a.
FIG. 4 is an overall structural schematic view of the aerosol-forming device according to another embodiment of the present disclosure.
FIG. 5 is an exploded schematic view of the aerosol-forming device in FIG. 4.
FIG. 6 is a structural schematic view of a contact position between a fixing assembly and a heating assembly according to an embodiment of the present disclosure.
FIG. 7 is a schematic cross-sectional view of the aerosol-forming device in FIG. 4 along a B-B direction.
FIG. 8 is another schematic cross-sectional view of the aerosol-forming device in FIG. 4 along a B-B direction.

Reference numerals description
aerosol-forming device 10; host 11; housing 111; engaging groove 1111; first housing portion 1112; second housing portion 1113; guiding groove 111a; clamping groove 111b; inner base 112; receiving groove 1120, stopping portion 1121; heating assembly 12; fixing mount 121; fixing base 1211; limiting portion 1212; heating body 122; fixing assembly 13; fixing body 131; first body potion 131a; second body potion 131b; receiving cavity 1310; first pressing portion 132; through hole 1320; second pressing portion 133; engaging portion 134.

### DETAILED DESCRIPTION

Technical solutions in the embodiments of the present disclosure will be clearly and completely described below by referring to the accompanying drawings in the embodiments of the present disclosure. Obviously, the described embodiments are only some of but not all of the embodiments of the present disclosure. Based on the embodiments in the present disclosure, all other embodiments obtained by any ordinary skilled person in the art without making creative work shall fall within the scope of the present disclosure.

Terms "first", "second" and "third" herein are used for descriptive purposes only and shall not be interpreted as indicating or implying relative importance or implicitly specifying the number of indicated technical features. Therefore, a feature defined by the "first", "second", or "third" may explicitly or implicitly include at least one such feature. In the description of the present disclosure, "a plurality of" means at least two, such as two, three, and so on, unless otherwise expressly and specifically limited. All directional indications in the present disclosure (such as up, down, left, right, front, rear, ...) are used only to explain relative position relationship, movement, and the like, between components at a particular posture (as shown in the drawings). When the posture is changed, the directional indications may change accordingly. In addition, terms "include" and "have", and any variations thereof are intended to cover non-exclusive inclusion. For example, a process, a method, a system, a product or an apparatus including a series of operations or units is not limited to the listed operations or units, but may further include operations or units that are not listed, or include other operations or units that are inherent to the process, the method, the product or the apparatus.

Terms "embodiments" of the present disclosure may indicate that a particular feature, a structure or a property described in an embodiment may be included in at least one embodiment of the present disclosure. Presence of the term in various sections in the specification does not necessarily mean a same embodiment or a separate or an alternative embodiment that is mutually exclusive with other embodiments. It shall be understood, both explicitly and implicitly, by any ordinary skilled person in the art that the embodiments described herein may be combined with other embodiments.

The present disclosure will be described in detail below by referring to the accompanying drawings and embodiments.

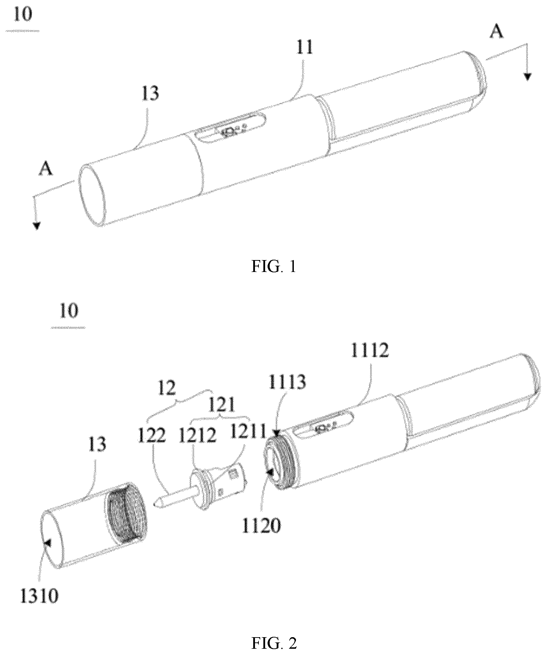

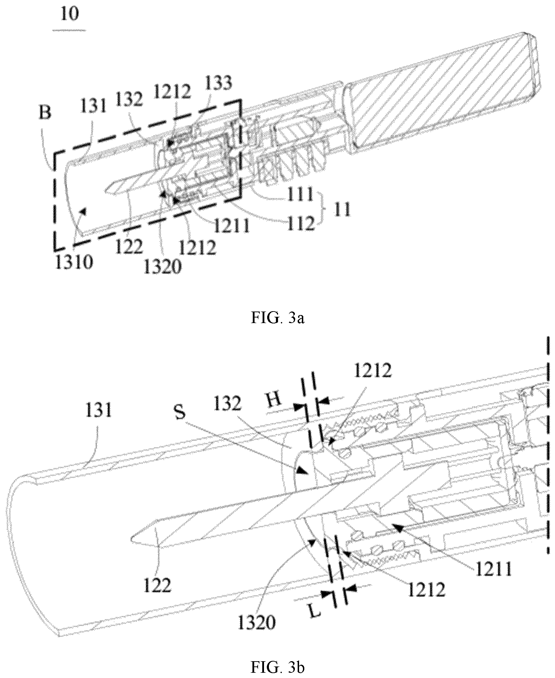

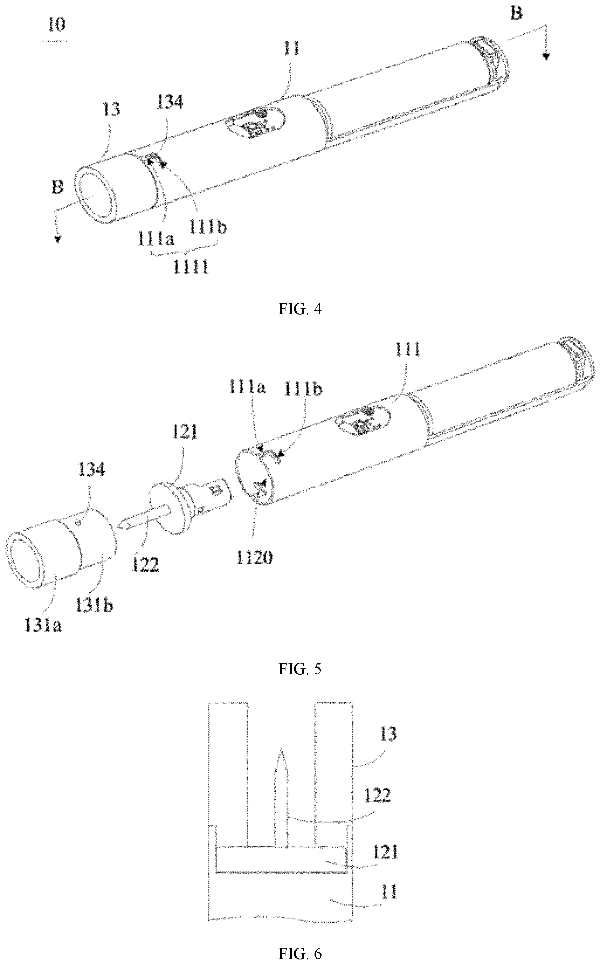

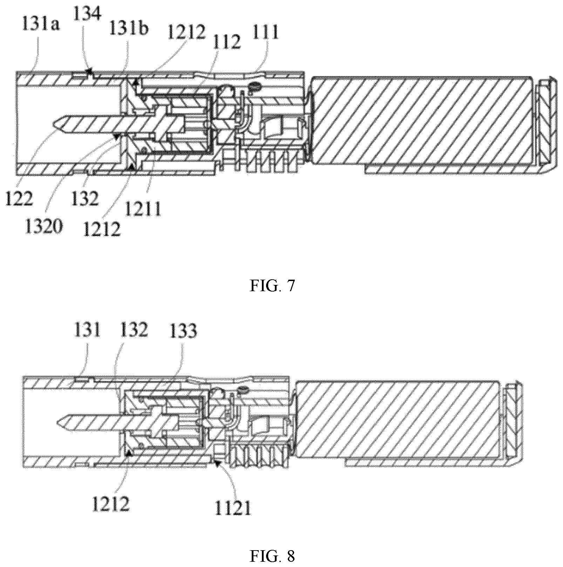

As shown in FIGS. 1-8, FIG. 1 is an overall structural schematic view of an aerosol-forming device according to an embodiment of the present disclosure, FIG. 2 is an exploded schematic view of the aerosol-forming device in FIG. 1, FIG. 3a is a schematic cross-sectional view of the aerosol-forming device in FIG. 1 along an A-A direction, FIG. 3b is a partial enlarged view of an area B in FIG. 3a, FIG. 4 is an overall structural schematic view of the aerosol-forming device according to another embodiment of the present disclosure, FIG. 5 is an exploded schematic view of the aerosol-forming device in FIG. 4, FIG. 6 is a structural schematic view of a contact position between a fixing assembly and a heating assembly according to an embodiment of the present disclosure, FIG. 7 is a schematic cross-sectional view of the aerosol-forming device in FIG. 4 along a B-B direction, and FIG. 8 is another schematic cross-sectional view of the aerosol-forming device in FIG. 4 along a B-B direction.

In some embodiments of the present disclosure, as shown in FIG. 1, an aerosol-forming device 10 is provided. The aerosol-forming device 10 includes a host 11, a heating assembly 12, and a fixing assembly 13.

In some embodiments, as shown in FIG. 2 and FIG. 3a, the host 11 may include a housing 111 and an inner base 112. The inner base 112 is arranged in the housing 111, and a receiving groove 1120 is defined in the inner base 12. The heating assembly 12 is at least partially received in the receiving groove 1120 and is electrically connected to the host 11. In some embodiments, the host 11 further includes a power supply assembly. The power supply assembly is arranged in the housing 111. When the heating assembly 12 is received in the receiving groove 1120, the heating assembly 12 is connected to the power supply assembly of the host 11, and the power supply assembly may be configured to supply power to the heating assembly 12. In some embodiments, the heating assembly 12 is electrically connected to the host 11 in a contact manner with a spring pin or pogo pin. The host 11 may be in a cylindrical shape, and the shape of the cross-sectional area of the host 11 may be circular, elliptical, or polygonal.

The heating assembly 12 is configured to heat and atomize the aerosol-forming substance when energized. In some embodiments, as shown in FIG. 2 and FIG. 3a, the heating assembly 12 may include a fixing mount 121 and a heating body 122. The fixing mount 121 is at least partially received in the receiving groove 1120. The heating body 122 is arranged on the fixing mount 121. When the fixing mount 121 is received in the receiving groove 1120, the heating body 122 is electrically connected to the power supply assembly of the host 11, so as to heat and atomize the aerosol-forming substance after the heating body 122 is energized. In an embodiment, the bottom wall of the receiving groove 1120 is arranged with a power interface. The end of the heating body 122 extends to the side surface of the fixing mount 121 facing the bottom wall of the receiving groove 1120. When the fixing mount 121 is received in the receiving groove 1120, the end of the heating body 122 is in contact with the power interface, and is electrically connected to the power supply assembly via the power interface.

In an embodiment, as shown in FIG. 3a or FIG. 7, the fixing mount 121 may include a fixing base 1211 and a limiting portion 1212. The limiting portion 1212 is arranged along the peripheral direction of the fixing base 1211.

The shape of the fixing base 1211 may be cylindrical. The fixing base 1211 may be at least partially received in the receiving groove 1120, and the heating body 122 is fixed on the fixing base 1211. In some embodiments, in order to prevent the fixing base 1211 from shaking in the receiving groove 1120, resulting in poor contact between the heating body 122 and the power supply assembly, the outer diameter of the fixing base 1211 may be substantially consistent with the diameter of the receiving groove 1120. In this case, it may be possible to ensure that the heating body 122 may be in close contact with the interface of the power supply assembly, thereby ensuring effective connection between the heating body 122 and the power supply assembly.

In some embodiments, the limiting portion 1212 may be a ring-shaped flange arranged on the outer sidewall of the fixing base 1211, and may be arranged around the peripheral direction of the fixing base 1211. In addition, the limiting portion 1212 may be located on the end of the fixing base 1211 close to the heating body 122. The outer diameter of the limiting portion 1212 is greater than the diameter of the receiving groove 1120, such that after the heating body 122 is connected to the power supply assembly, the limiting portion 1212 may be in contact with the end surface of the inner base 112, that is, the limiting portion 1212 may be in contact with the end surface of the end where the notch of the receiving groove 1120 is located. The outer diameter of the limiting portion 1212 may be interpreted as the diameter of the pattern or contour corresponding to the outer surface of the limiting portion 1212.

In an embodiment, as shown in FIG. 6, the outer diameter of the limiting portion 1212 may be substantially consistent with the inner diameter of the housing 111, such that the inner sidewall of the housing 111 may be configured to limit the limiting portion 1212 in the radial direction of the limiting portion 1212, thereby preventing the heating assembly 12 from shaking along the radial direction thereof.

As shown in FIG. 2 or FIG. 5, the fixing assembly 13 is detachably connected to the host 11, and when the fixing assembly 13 is connected to the host 11, the heating assembly 13 is at least partially in contact with the fixing assembly 12, so as to fix the heating assembly 12 in the receiving groove 1120 of the host 11. In an embodiment, the fixing assembly 13 abuts against the at least part of the heating assembly 12, so as to improve fixing effect. In some embodiments, the fixing assembly 13 may be in contact with the limiting portion 1212 of the fixing mount 121. The heating assembly 12 may be fixedly connected to the host 11 only via the fixing assembly 13. The heating assembly 12 is fixed in the receiving groove 1120 of the host 11 via the fixing assembly 13, and the fixing assembly 13 is detachably connected to the host 11. In this way, when it is necessary to replace or clean the heating assembly 12, it is only necessary to disassemble the fixing assembly 13, and thus the heating assembly 12 may be separated from the host 11. After the replacement or cleaning is completed, the fixing assembly 13 is reconnected to the host 11, and thus the heating assembly 12 may be fixed to the host 11 again. Compared with the solution of fixing the heating assembly 12 to the host 11, it may be more convenient to replace and clean the heating assembly 12.

In an embodiment, as shown in FIG. 6, the fixing assembly 13 may be a hollow tubular body. The tube diameter or inner diameter of the hollow tubular body is smaller than the outer diameter of the limiting portion 1212, and the tube diameter or inner diameter of the hollow tubular body may be further smaller than the diameter of the receiving groove 1120, such that the sidewall of the hollow tubular body may be configured to contact with the limiting portion 1212, thereby fixing the heating assembly 12 to the host 11.

In some embodiments, as shown in FIG. 3a or FIG. 7, the fixing assembly 13 may include a fixing body 131 and a first pressing portion 132 arranged on the fixing body 131. The fixing body 131 may be a hollow tubular body, and a receiving cavity 1310 configured to accommodate the aerosol-forming substance may be defined in the fixing body 131. The first pressing portion 132 may be arranged on the inner wall surface of the tubular fixing body 131. In an embodiment, the first pressing portion 132 of the fixing assembly 13 is in contact with the limiting portion 1212 of the heating assembly 12, so as to clamp the limiting portion 1212 between the first pressing portion 132 and the sidewall of the inner base 112, thereby fixing the heating assembly 12 to the host 11. The heating body 122 penetrates the first pressing portion 132 and extends into the receiving cavity 1310, so as to heat and atomize the aerosol-forming substance after the heating body 122 is energized.

In some embodiments, the fixing body 131 may be a tubular body defining or having openings at two ends, and the shape of the cross-sectional area of the fixing body 131 may be circular or polygonal. As shown in FIG. 3a or FIG. 7, the first pressing portion 132 may be arranged at the end of the tubular body configured to connect to the end of the host 11, and is located in the tubular body. In some embodiments, embodiments, the fixing body 131 may be integrally formed with the first pressing portion 132.

In some embodiments, as shown in FIG. 3a, FIG. 7, or FIG. 8, a through hole 1320 may be defined on the first pressing portion 132. When the first pressing portion 132 is in contact with the fixing mount 121, the part of the heating body 122 protruding from the fixing mount 121 may be extended into the receiving cavity 1310 via the through hole 1320, such that the heating body 122 may avoid the first pressing portion 132. In this way, it may be possible to heat the aerosol-forming substance embedded in the receiving cavity 1310 and facilitate the cleaning of the heating body 122. In an embodiment, the shape of the through hole 1320 may be substantially consistent with that of the heating body 122, and the diameter or inner diameter of the through hole 1320 may be substantially consistent with the outer diameter of the heating body 122, such that the sidewall of the through hole 1320, i.e., the first pressing portion 132, may be configured to scrape off a residue on the heating body 122. In addition, the first pressing portion 132 may limit the heating body 122 along the radial direction of the heating body 122, so as to prevent the heating assembly 12 from shaking along the radial direction thereof. At the same time, the central axis of the through hole 1320 may substantially coincide with the central axis of the tubular fixing assembly 13, that is, the central axis of the through hole 1320 may be substantially co-linear with the central axis of the tubular fixing assembly 13. In this way, the distance between the heating body 122 and the inner sidewall of the fixing assembly 13 is the same in each direction, that is, the heating body 122 is in the central position of the fixing assembly 13, such that the heating body 122 may centrally heat the aerosol-forming substance inserted into the fixing assembly 13, thereby improving the uniformity of heating.

Of course, in other embodiments, in combination with FIG. 3b, the diameter or inner diameter of the through hole 1320 may also be greater than the radial size of the heating body 122. In an embodiment, the shape of the through hole 1320 may match the external contour of the fixing base 1211. The diameter or inner diameter of the through hole 1320 is substantially consistent with the outer diameter of the fixing base 1211. In addition, the limiting portion 1212 is located on the end of the fixing base 1211 close to the first pressing portion 132. The linear distance L between the limiting portion 1212 and the end surface S of the end of the fixing base 1211 close to the first pressing portion 132 is the same size as the thickness H of the first pressing portion 132. In this way, the part of the fixing base 1211 located on the side of the limiting portion 1212 close to the first pressing portion 132 may be embedded in the through hole 1320 defined by the first pressing portion 132, so as to limit the fixing base 1211 along the radial direction thereof through the first pressing portion 132, thereby preventing the heating assembly 12 from shaking back and forth along the radial direction thereof.

The first pressing portion 132 may be a protrusion portion arranged on the inner side wall of the tubular body. In an embodiment, as shown in FIG. 3a or FIG. 7, the protrusion portion may be a ringed-shape flange, and the ringed-shape flange is arranged in a circle along the peripheral direction of the tubular body. Of course, in other embodiments, the protrusion portion may further include a plurality of protruding blocks. The plurality of protruding blocks are arranged at intervals along the peripheral direction of the tubular body, and the through hole 1320 is defined on the end of each of several protruding blocks away from the inner wall surface of the tubular body, and is configured to allow the heating body 122 of the heating assembly 12 to pass through. In some embodiments, the plurality of protruding blocks may be arranged at equal intervals along the peripheral direction of the tubular body.

As shown in FIG. 8, in an embodiment, the fixing assembly 13 may further include a second pressing portion 133. The second pressing portion 133 is connected to the fixing body 131, extends along the length direction of the fixing body 131 and facing away from the fixing body 131, and configured to limit the heating assembly 12 in the radial direction of the fixing mount 121. In some embodiments, the second pressing portion 133 may be a tubular body, and the tube diameter or inner diameter of the tubular second pressing portion 133 is substantially consistent with the outer diameter of the limiting portion 1212, so as to limit the limiting portion 1212 in the radial direction of the limiting portion 1212, thereby fixing the heating assembly 12 in the radial direction of the heating assembly 12.

In some embodiments, as shown in FIG. 8, a stopping portion 1121 is further arranged on the outer sidewall of the inner base 112 away from the end of a pressing assembly. After the pressing assembly is connected to the host 11, the end of the second pressing portion 133 away from the fixing body 131 is in contact with the stopping portion 1121.

In an embodiment, as shown in FIG. 2 and FIG. 3a, the fixing assembly 13 may be detachably connected to the host 11 via a thread.

In some embodiments, a first tubular connection portion is arranged on the end of the fixing assembly 13 facing the host 11. A second tubular connection portion is arranged on the end of the host 11 facing the fixing assembly 13. The outer sidewall of one of the first tubular connection portion of the fixing assembly 13 and the second tubular connection portion of the host 11 is arranged with an external thread, and the inner sidewall of the other of the first tubular connection portion of the fixing assembly 13 and the second tubular connection portion of the host 11 is arranged with an internal thread, such that the first tubular connection portion is threadedly connected to the second tubular connection portion through the external thread and the internal thread.

In an embodiment, as shown in FIG. 3a, the housing 111 includes a first housing portion 1112 and a second housing portion 1113 axially connected to the first housing portion 1112. The first housing portion 1112 is arranged with the second tubular connection portion of the host 11. The external thread is arranged on the outer sidewall of the first housing portion 1112, and the internal thread is arranged on the inner sidewall of the first tubular connection portion. In some embodiments, the internal thread may be arranged on the inner sidewall of the second pressing portion 133.

The outer diameter of the first housing portion 1112 may be smaller than the outer diameter of the second housing portion 1113, and the difference between the outer diameter of the first housing portion 1112 and the outer diameter of the second housing portion 1113 is substantially consistent with or equal to the wall thickness of the tube wall of the fixing assembly 13. In this way, it may be possible to ensure that the outer diameter of the fixing assembly 13 is substantially consistent with that of the host 11 after the fixing assembly 13 is rotated into the host 11, so as to improve the overall coordination of the product and increase the overall aesthetic of the product.

As shown in FIGS. 4-7, in an embodiment, the fixing assembly 13 is detachably connected to the host 11 via an engaging portion 134.

In some embodiments, one of the first tubular connection portion of the fixing assembly 13 and the second tubular connection portion of the host 11 is arranged with the engaging portion 134, and the other of the fixing assembly 13 and the second tubular connection portion of the host 11 is arranged with an engaging groove 1111, such that the first tubular connection portion is engaged with the second tubular connection portion.

In an embodiment, the engaging portion 134 may be arranged on the first tubular connection portion of the fixing assembly 13 and located on the outer wall surface of the first tubular connection portion. The engaging groove 1111 may be defined on the second tubular connection portion of the host 11. The engaging groove 1111 may include a guiding groove 111a and a clamping groove 111b that communicate with each other. The guiding groove 111a extends from the end surface of the host 11 at the end of the host 11 facing the fixing assembly 13 toward the end of the host 11 away from the fixing assembly 13, that is, the guiding groove 111a is an open groove. The open groove faces the first tubular connection portion, such that the engaging portion 134 of the first tubular connection portion may enter the guiding groove 111a. The clamping groove 111b extends along the peripheral direction of the host 11. After the engaging portion 134 enters the guiding groove 111a, the engaging portion 134 moves along the guiding groove 111a until the engaging portion 134 moves to the position where the guiding groove 111a communicates with the clamping groove 111b, and then the first tubular connection portion and the second tubular connection portion are caused to move relatively in the radial direction. In this way, it may be possible to cause the engaging portion 134 to slide into the clamping groove 111b, and thus the fixing assembly 13 may be engaged with the host 11.

In an embodiment, as shown in FIG. 7, the fixing body 131 may include a first body portion 131a and a second body portion 131b. The outer diameter of the first body portion 131a is greater than the outer diameter of the second body portion 131b, and the outer diameter of the first body portion 131a may be substantially equal to the outer diameter of the host 11. The first tubular connection portion is arranged on the second body potion 131b, the engaging portion 134 is arranged on the outer side surface of the second body potion 131b, and the height of the engaging portion 134 is substantially consistent with or equal to the difference between the outer diameter of the first body potion 131a and the outer diameter of the second body potion 131b. In this way, the end of the engaging portion 134 away from the second body potion 131b is flush with the outer surface of the first body potion 131a, and thus it may be possible to ensure that the outer surface of the aerosol-forming device 10 is flush, and the overall curve of the aerosol-forming device 10 is more coordinated, thereby effectively increasing the overall aesthetic of the product.

In the aerosol-forming device 10 provided by some embodiments of the present disclosure, by arranging the host 11 and the heating assembly 12, a receiving groove 1120 is defined on the host 11, such that the heating assembly 12 is at least partially received in the receiving groove 1120, and thus the heating assembly 12 may be electrically connected to the host 11. Besides, by arranging the fixing assembly 13, the fixing assembly 13 is detachably connected to the host 11, and after the fixing assembly 13 is connected to the host 11, the heating assembly 13 is partially in contact with the fixing assembly 12, so as to fix the heating assembly 12 to the host 11. Since the heating assembly 12 is fixedly in contact with the receiving groove 1120 of the host 11 via the fixing assembly 13, and the fixing assembly 13 is detachably connected to the host 11, such that when it is necessary to replace or clean the heating assembly 12, it is only necessary to disassemble the fixing assembly 13, and thus the heating assembly 12 may be separated from the host 11. In this way, it may be possible to allow users to replace the heating assembly 12 by themselves, and thus it may be more convenient to replace and clean the heating assembly 12.

The above is only an embodiment of the present disclosure and is not intended to limit the scope of the present disclosure. Any equivalent structure or process transformation using the contents of the specification and the accompanying drawings of the present disclosure, or any direct or indirect application in other related technical fields, is equally included in the scope of the present disclosure.

## Claims

1. An aerosol-forming device, comprising:
a host, having a receiving groove;
a heating assembly, at least partially received in the receiving groove and electrically connected to the host;
a fixing assembly, detachably connected to the host, wherein in response to the fixing assembly being connected to the host, the heating assembly is partially in contact with the fixing assembly, so as to fix the heating assembly to the host.

2. The aerosol-forming device according to claim 1, wherein the heating assembly comprises a fixing mount and a heating body arranged on the fixing mount;
the fixing assembly comprises a fixing body and a first pressing portion, and a receiving cavity is defined by the fixing body; and
the first pressing portion is in contact with the fixing mount, and the heating body penetrates the first pressing portion and extends into the receiving cavity.

3. The aerosol-forming device according to claim 2, wherein the fixing body is a tubular body, and the first pressing portion is arranged on the inner wall surface of the tubular body and is located on the end of the tubular body configured to connect to the end of the host.

4. The aerosol-forming device according to claim 3, wherein the first pressing portion is a ringed-shape flange, and the ringed-shape flange is arranged in a circle along the peripheral direction of the tubular body; or
the first pressing portion comprises a plurality of protruding blocks, and the plurality of protruding blocks are arranged at intervals along the peripheral direction of the tubular body.

5. The aerosol-forming device according to claim 3, wherein a through hole is defined on the first pressing portion, and the heating body penetrates the through hole and extends into the receiving cavity; and
the shape and size of the through hole match the shape and size of the heating body.

6. The aerosol-forming device according to claim 2, wherein the fixing mount comprises a fixing base and a limiting portion arranged on the outer sidewall of the fixing base, the fixing base is received in the receiving groove, the outer diameter of the limiting portion is greater than the diameter of the receiving groove, and the first pressing portion is in contact with the limiting portion.

7. The aerosol-forming device according to claim 6, wherein the outer diameter of the fixing base is consistent with the inner diameter of the first pressing portion; and/or
the outer diameter of the fixing base is consistent with the diameter of the receiving groove, the limiting portion is located on the end of the fixing base close to the first pressing portion, and the linear distance between the limiting portion and the end surface of the end of the fixing base close to the first pressing portion is consistent with the thickness of the first pressing portion.

8. The aerosol-forming device according to claim 6, wherein the host comprises a housing and an inner base arranged in the housing, the receiving groove is defined on the inner base, and the outer diameter of the limiting portion is consistent with the inner diameter of the housing.

9. The aerosol-forming device according to claim 6, wherein the fixing assembly further comprises a second pressing portion; and
the second pressing portion is connected to the fixing body, extends along the length direction of the fixing body towards the direction away from the fixing body, and is configured to limit the heating assembly in the radial direction of the fixing mount.

10. The aerosol-forming device according to claim 9, wherein the second pressing portion is a tubular body, and the tube diameter of the tubular body is consistent with the outer diameter of the limiting portion.

11. The aerosol-forming device according to claim 2, wherein a first tubular connection portion is arranged on the end of the fixing assembly facing the host, and a second tubular connection portion is arranged on the end of the host facing the fixing assembly; and
one of the first tubular connection portion and the second tubular connection portion is arranged with an external thread, and the other of the first tubular connection portion and the second tubular connection portion is arranged with an internal thread, such that the first tubular connection portion is threadedly connected to the second tubular connection portion.

12. The aerosol-forming device according to claim 2, wherein a first tubular connection portion is arranged on the end of the fixing assembly facing the host, the second tubular connection portion is arranged on the end of the host facing the fixing assembly; and
one of the first tubular connection portion and the second tubular connection portion is arranged with an engaging portion, and the other of the first tubular connection portion and the second tubular connection portion is arranged with an engaging groove, and the first tubular connection portion is engaged with the second tubular connection portion.

13. The aerosol-forming device according to claim 12, wherein the engaging portion is formed on the outer wall surface of the fixing assembly;
the engaging groove comprises a guiding groove and a clamping groove which communicate with each other; and
the guiding groove extends from the end surface of the host facing the end of the fixing assembly toward the end of the host away from the fixing assembly, the clamping groove extends along the peripheral direction of the host, and the engaging portion slides into the clamping groove along the guiding groove for clamping.
